# EUROPÄISCHE PATENTANMELDUNG

(11) **EP 4 005 838 A1**
(43) Veröffentlichungstag der Anmeldung: **01.06.2022**
(21) Anmeldenummer: 20210500.3
(22) Anmeldetag: 28.11.2020
(51) Int. Cl.: B60J 5/04

(54) **KRAFTFAHRZEUG-FAHRZEUGTÜRE MIT EINER TÜRKAROSSERIE**

(71) Anmelder: Hi-Lex Europe GmbH, 97424 Schweinfurt (DE)
(72) Erfinder: Vendulet, Joachim, 67700 Niederkirchen (DE)
(74) Vertreter: Gosdin, Carstensen & Partner Patentanwälte Partnerschaftgesellschaft mbB

(57) **Zusammenfassung**

Die Erfindung betrifft eine Kraftfahrzeug-Fahrzeugtüre mit einer Türkarosserie, wobei diese durch eine Nass-Trockenraum-Trennung in einen Nassraum und in einen Trockenraum getrennt ist, wobei die Nass-Trockenraum-Trennung eine Dichtungsanordnung (2) umfasst, die an dem Türmodul (1) angeordnet und mit diesem verbunden ist, wobei die Dichtungsanordnung (2) aus einem Dichtungsmaterial besteht, welches, in einem Schnitt senkrecht zu einer Längsrichtung (L) betrachtet, einen Basisabschnitt (3) aufweist, von dem aus sich zwei Dichtlippen (4, 5) erstrecken. Die Erfindung sieht vor, dass sich die beiden Dichtlippen (4, 5) von einem Ansatzpunkt (6, 7) am Basisabschnitt (3) ausgehend zu einem Endpunkt (8, 9) am Ende (10, 11) der Dichtlippe (4, 5) erstrecken und so jeweils eine Dichtlippenrichtung (R1, R2) definieren, wobei der Winkel (α) zwischen den beiden Dichtlippenrichtungen (R1, R2) größer oder gleich Null Grad beträgt, so dass die beiden Dichtlippen (4, 5) voneinander weg gerichtet sind oder sich parallel zueinander erstrecken.

## Beschreibung

Die Erfindung betrifft eine Kraftfahrzeug-Fahrzeugtüre mit einer Türkarosserie, wobei die Türkarosserie durch eine Nass-Trockenraum-Trennung in einen Nassraum und in einen Trockenraum getrennt ist, wobei der Nassraum zum einen von der Türaußenhaut und zum anderen von einem Türmodul begrenzt ist, wobei sich der Trockenraum an die Nass-Trockenraum-Trennung zu einer Türinnenverkleidung anschließt, wobei die Nass-Trockenraum-Trennung eine Dichtungsanordnung umfasst, die an dem Türmodul angeordnet und mit diesem verbunden ist, wobei die Dichtungsanordnung aus einem sich in eine Längsrichtung erstreckendes Dichtungsmaterial besteht, welches, in einem Schnitt senkrecht zur Längsrichtung betrachtet, einen Basisabschnitt aufweist, von dem aus sich zwei Dichtlippen erstrecken.

Eine Kraftfahrzeug-Fahrzeugtüre dieser Art ist beispielsweise aus der DE 20 2007 002 572 U1 bekannt. Um das hier zum Einsatz kommende Türmodul gegen die Fahrzeugtüre abzudichten, ist eine Dichtungsanordnung mit zwei Dichtlippen vorgesehen. Dabei bilden die beiden Dichtlippen zusammen mit dem Basisabschnitt der Dichtungsanordnung in einem Schnitt senkrecht zur Längsrichtung eine im Wesentlichen U-förmige Kontur, wobei sich die beiden Dichtlippen in ihrem Endbereich einander annähern.

Bei der Montage des Türmoduls an die Fahrzeugtüre liegen nicht immer optimale Bedingungen vor, so dass es erforderlich sein kann, bei der Montage das Türmodul relativ zur Fahrzeugtüre in der Ebene zu verschieben, an der die beiden Teile aneinander liegen. Dabei wird das Problem beobachtet, dass eine der Dichtlippen, im schlimmsten Falle sogar beide Dichtlippen, umknicken, so dass dann unter Umständen trotz Einsatz zweier Dichtlippen keine einwandfreie Dichtwirkung mehr gewährleistet ist.

Der Erfindung liegt daher die **Aufgabe** zugrunde, eine Fahrzeugtüre eines Kraftfahrzeugs der eingangs genannten Art so fortzubilden, dass auch bei erschwerten Montagebedingungen stets sichergestellt ist, dass eine optimale Dichtwirkung der Dichtungsanordnung gewährleistet ist, so dass der Trockenraum zuverlässig gegen den Nassraum abgedichtet ist.

Die **Lösung** dieser Aufgabe durch die Erfindung ist dadurch gekennzeichnet, dass sich die beiden Dichtlippen, in einem Schnitt senkrecht zur Längsrichtung betrachtet, von einem Ansatzpunkt am Basisabschnitt ausgehend zu einem Endpunkt am Ende der Dichtlippe erstrecken und so jeweils eine Dichtlippenrichtung definieren, wobei der Winkel zwischen den beiden Dichtlippenrichtungen größer oder gleich Null Grad beträgt, so dass die beiden Dichtlippen voneinander weg gerichtet sind oder sich (im Grenzfall) parallel zueinander erstrecken.

Damit wird auch bei problematischen Montageverhältnissen stets sichergestellt, dass die Dichtlippen zuverlässig in ihrer bestimmungsgemäß vorgesehenen Position an der Fahrzeugtüre anliegen und so die Dichtwirkung gewährleistet ist.

Der Winkel zwischen den beiden Dichtlippenrichtungen ist dabei bevorzugt größer als 10°, insbesondere größer als 20°, und besonders bevorzugt größer als 30°.

Die beiden Dichtlippen bilden dabei (im genannten Schnitt senkrecht zur Längsrichtung) bevorzugt eine V-förmige Gestaltung.

Die Länge der beiden Dichtlippen ist dabei bevorzugt, ausgehend vom Basisabschnitt, unterschiedlich. Die eine Dichtlippe ist dabei insbesondere bevorzugt mindestens 10 % länger ausgebildet als die andere Dichtlippe.

Das Dichtungsmaterial besteht bevorzugt aus einem Thermoplastischen Elastomer (TPE). Das Dichtungsmaterial weist dabei bevorzugt eine Härte zwischen 30 und 50 Shore A auf.

Der Basisabschnitt der Dichtung ist bevorzugt zumindest teilweise in einer Nut angeordnet, die im Türmodul ausgebildet ist. Die Dichtungsanordnung ist dabei bevorzugt in der Nut des Türmoduls durch Anspritzen angeordnet.

Das Türmodul besteht bevorzugt zumindest teilweise aus Kunststoff, vorzugsweise aus Polypropylen (PP). Er kann mit Glasfasern verstärkt sein.

Im Türmodul ist bevorzugt ein Fensterheber (Kompakt-Fensterheber/integrierter Fensterheber) angeordnet.

Im Gegensatz zu vorbekannten Lösungen ist es somit nicht mehr nötig, dass das Türmodul zwingend stets senkrecht zur Fahrzeugtür montiert werden muss, um ein ungewolltes Umknicken der Dichtlippen zu verhindern. Insbesondere wird durch die genannte Ausrichtung der beiden Dichtlippen erreicht, dass das Modul bei der Montage nicht nur senkrecht zur Tür, sondern auch in einer Richtung parallel zu dieser verschoben werden kann, ohne die Funktionalität der Dichtungsanordnung zu beeinträchtigen.

Darüber hinaus ergeben sich folgende Vorteile beim Einsatz der vorgeschlagenen Lösung:
Die beiden Dichtlippen legen sich bei der Montage in der Endposition so an, dass diese stets gegen den Wasserdruck liegen und so ein hohes Maß an Dichtigkeit gewährleisten. Durch die beanspruchte Ausrichtung der beiden Dichtlippen wird durch den Wasserdruck eine Verstärkung der Dichtwirkung erzielt.

Durch die beanspruchte Ausrichtung und Geometrie wird eine gegenseitige Beeinträchtigung der beiden Dichtlippen verhindert. Ferner erfordern die beiden Dichtlippen nur einen geringen Bauraum.

Durch die Gestaltung der Dichtlippen werden Falze bzw. Knicke in der Dichtung im Bereich von Radien ausgeschlossen. Ferner wird hierdurch sichergestellt, dass bei der Montage und im Betrieb immer alle Dichtlippen anliegen.

Die Gestaltung der Dichtlippen macht die gesamte Dichtungsanordnung auch unempfindlich gegenüber schwankenden Anpresskräften bei der Montage.

Durch die vorgesehene Geometrie der Dichtung wird auch der Herstellungsprozess vereinfacht; es sind keine zusätzlichen Schieber im Spritzgieß-Werkzeug erforderlich.

Wenngleich der bevorzugte Anwendungsfall derjenige ist, bei dem die Dichtungsanordnung direkt an das Türmodul angespritzt wird, ist es natürlich auch möglich, dass andere Verfahren bei der Aufbringung der Dichtung angewendet werden. Die Dichtung kann insbesondere anextrudiert oder aufgeklebt werden.

In der Zeichnung sind Ausführungsbeispiele der Erfindung dargestellt. Es zeigen:
- Fig. 1: schematisch in der Seitenansicht ein Kraftfahrzeug mit einer Fahrzeugtüre, in der ein Türmodul montiert ist,
- Fig. 2: den Schnitt durch einen Teil des Türmoduls mit Darstellung einer Dichtungsanordnung,
- Fig. 3: in vergrößerter Darstellung den linken Bereich aus Figur 2 mit Darstellung eine Dichtungsanordnung nach einem ersten Ausführungsbeispiel der Erfindung,
- Fig. 4: in vergrößerter Darstellung den linken Bereich aus Figur 2 mit Darstellung eine Dichtungsanordnung nach einem zweiten Ausführungsbeispiel der Erfindung und
- Fig. 5: eine Dichtungsanordnung nach einem dritten Ausführungsbeispiel der Erfindung.

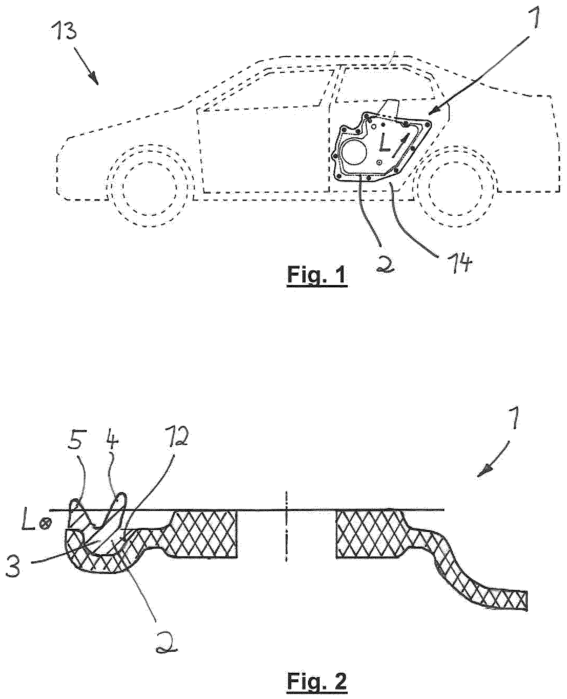

In Figur 1 ist ein Kraftfahrzeug 13 skizziert, welches mehrere Fahrzeugtüren 14 hat. Jede Fahrzeugtür 14 ist mit einem Türmodul 1 ausgestattet, in welches jeweils ein Fensterheber integriert ist. Die Fahrzeugtüre 14 umfasst eine Türkarosserie, wobei diese durch eine Nass-Trockenraum-Trennung in einen Nassraum und in einen Trockenraum getrennt ist. Der Nassraum ist einerseits von der Türaußenhaut und andererseits vom Türmodul 1 begrenzt. Der Trockenraum schließt sich an die Nass-Trockenraum-Trennung zu einer nicht dargestellten Türinnenverkleidung an. Die Nass-Trockenraum-Trennung umfasst dabei eine Dichtungsanordnung 2. Diese ist am Türmodul 1 angeordnet und mit diesem verbunden. Die Dichtungsanordnung 2 erstreckt sich dabei in eine Längsrichtung L, die um das Türmodul 1 umläuft, wie es aus Figur 1 hervorgeht. Insgesamt bildet die Dichtungsanordnung 2, wie in Figur 1 zu sehen, eine geschlossene Kurve.

Das Türmodul 1 ist etwas detaillierter in Figur 2 skizziert. Zu erkennen ist hier, dass im Bereich des Umfangs des Türmoduls 1 in diesem eine Nut 12 vorgesehen ist, die für die Aufnahme der Dichtungsanordnung 2 vorgesehen ist. Die Dichtungsanordnung 2 ist dabei durch Anspritzen im Rahmen eines Spritzgießprozesses hergestellt worden. In Figur 2 ist weiter zu erkennen, dass die Dichtungsanordnung 2 prinzipiell einen Basisabschnitt 3 aufweist, der im wesentlichen in der Nut 12 angeordnet ist, sowie zwei Dichtlippen 4 und 5 die sich vom Basisabschnitt 3 weg erstrecken.

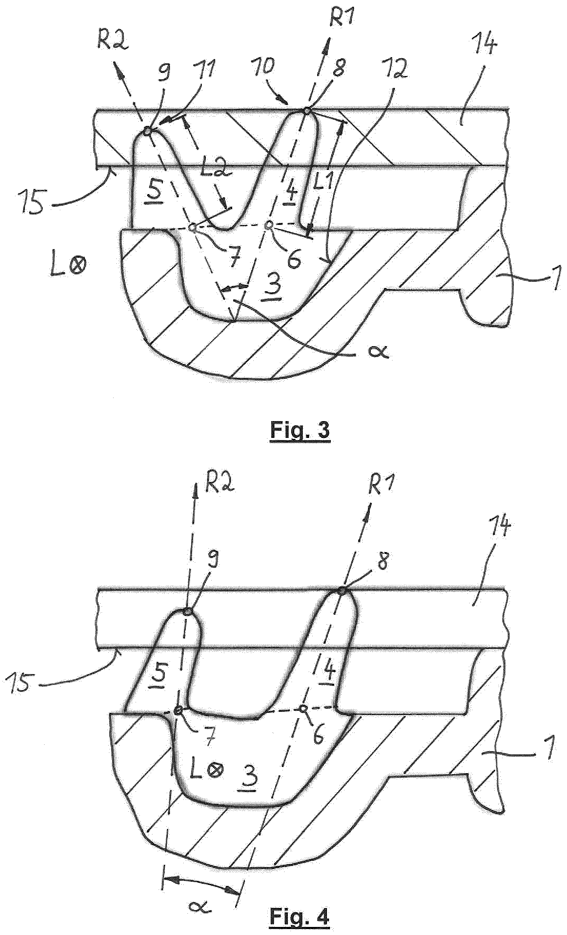

In den Figuren 3, 4 und 5 sind drei Ausführungsformen für die Dichtungsanordnung 2 dargestellt; dabei sind jeweils Schnitte senkrecht zur Längsrichtung L der Dichtungsanordnung 2 skizziert.

In den Figuren 3 und 4 ist dabei die Fahrzeugtüre 14 angedeutet, die eine Anlagefläche 15 aufweist, gegen die die beiden Dichtlippen 4 und 5 im montierten Zustand anliegen. Dargestellt sind die beiden Dichtlippen 4, 5 allerdings jeweils in demjenigen (spannungsfreien) Zustand, bei dem die Fahrzeugtür 14 mit ihrer Anlagefläche 15 noch nicht gegen die Dichtlippen 4, 5 drückt.

Für die nachfolgenden Betrachtungen wird die Dichtungsanordnung 2, wie sie in den Figuren 3 bis 5 zu sehen ist, gedanklich generell in den Basisabschnitt 3 sowie in die beiden Dichtlippen 4 und 5 aufgeteilt, wenngleich der Basisabschnitt 3 sowie die Dichtlippen 4 und 5 einstückig ausgebildet sind.

Mit Blick auf die genannten Figuren 3, 4 und 5 ergibt sich, dass sich für den Ansatz der beiden Dichtlippen 4 und 5 am Basisabschnitt 3 Ansatzpunkte 6 und 7 ergeben, an welchen sich die Dichtlippen 4, 5 vom Basisabschnitt 3 absetzen und sich im Wesentlichen in eine Erstreckungsrichtung erstrecken. In den Figuren sind die jeweiligen Ansatzpunkte 6 und 7 eingetragen; sie ergeben sich daraus, dass die beiden Seitenbegrenzungspunkte der Dichtlippen am Übergang vom Basisabschnitt 3 zur Dichtlippe 4, 5 betrachtet und hiervon die Mitte genommen wird, um zu den Punkten 6 und 7 zu gelangen.

Des Weiteren lässt sich für jede der beiden Dichtlippen 4, 5 ein Endpunkt 8 bzw. 9 definieren, der am Ende 10 bzw. 11 der jeweiligen Dichtlippe liegt (s. insbesondere Figur 3).

Durch die genannte Definition der Ansatzpunkte 6 bzw. 7 sowie der Endpunkte 8 bzw. 9 ergibt sich für jede Dichtlippe 4 bzw. 5 eine Dichtlippenrichtung R1 bzw. R2, in die sich die Dichtlippe 4 bzw. 5 erstreckt. Die Dichtlippenrichtung R1 bzw. R2 ist für alle drei Ausführungsbeispiele gemäß den Figuren 3 bis 5 eingetragen.

Wesentlich ist nun, dass der Winkel α zwischen den beiden Dichtlippenrichtungen R1 und R2 erfindungsgemäß größer oder gleich Null Grad beträgt. Dies hat zur Folge, dass die beiden Dichtlippen 4, 5 voneinander weg gerichtet sind oder sich (im Grenzfall) zumindest parallel zueinander erstrecken.

In Figur 3 ist zu erkennen, dass der Winkel α etwa 45° beträgt, so dass die beiden Dichtlippen 4 und 5 eine V-förmige Gestalt (in einem Schnitt senkrecht zur Längsrichtung L) aufweisen.

Bei der Lösung gemäß Figur 4 ist dieser Winkel deutlich geringer und liegt bei ca. 15°.

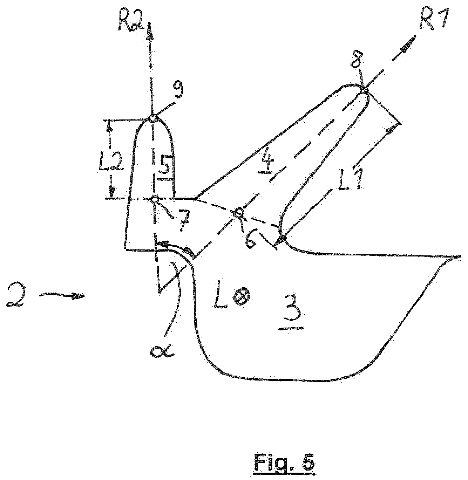

Bei der Lösung gemäß Figur 5 ist der Winkel α wiederum größer und liegt bei ca. 45°.

Es gilt bei sämtlichen Ausführungsbeispielen demgemäß, dass die beiden Dichtlippen 4, 5 voneinander weg gerichtet sind, was zur Folge hat, dass auch bei problematischen Montagebedingungen stets sichergestellt ist, dass die beiden Dichtlippen 4, 5 in der für sie vorgesehenen bestimmungsgemäßen Lage zur Anlage an der Fahrzeugtüre 14 kommen.

Eine einwandfreie Funktion der Dichtung ist somit sichergestellt.

Begünstigt wird die Funktionalität der Dichtungsanordnung 2 dadurch, dass die Längen der beiden Dichtlippen 4 und 5 unterschiedlich ist. Hierzu ist in den Figuren 3 und 5 die Länge L1 der ersten Dichtlippe 4 sowie die Länge L2 der zweiten Dichtlippe 5 eingetragen, woraus sich ergibt, dass die eine Dichtlippe deutlich länger ausgeführt ist als die andere Dichtlippe.

Dabei ist bevorzugt vorgesehen, dass die sich weiter am Rand des Türmoduls 1 befindliche Dichtlippe 5 kürzer ausgebildet ist als die weiter innen liegende Dichtlippe 4. Die längere Dichtlippe 4 ist dabei um mindestens 10 % länger als die kürzere Dichtlippe 5, wobei sich aus den dargestellten Ausführungsbeispiel gemäß der Figuren 3, 4 und 5 ergibt, dass sie längere Dichtlippe auch deutlich länger als die kürzere Dichtlippe sein kann.

### Bezugszeichenliste:

- 1: Türmodul
- 2: Dichtungsanordnung
- 3: Basisabschnitt
- 4: erste Dichtlippe
- 5: zweite Dichtlippe
- 6: Ansatzpunkt der ersten Dichtlippe
- 7: Ansatzpunkt der zweiten Dichtlippe
- 8: Endpunkt der ersten Dichtlippe
- 9: Endpunkt der zweiten Dichtlippe
- 10: Ende der ersten Dichtlippe
- 11: Ende der zweiten Dichtlippe
- 12: Nut im Türmodul
- 13: Kraftfahrzeug
- 14: Fahrzeugtüre
- 15: Anlagefläche

- L: Längsrichtung
- R1: Dichtlippenrichtung der ersten Dichtlippe
- R2: Dichtlippenrichtung der zweiten Dichtlippe
- α: Winkel
- L1: Länge der ersten Dichtlippe
- L2: Länge der zweiten Dichtlippe

## Patentansprüche

1. Kraftfahrzeug-Fahrzeugtüre mit einer Türkarosserie, wobei die Türkarosserie durch eine Nass-Trockenraum-Trennung in einen Nassraum und in einen Trockenraum getrennt ist, wobei der Nassraum zum einen von der Türaußenhaut und zum anderen von einem Türmodul (1) begrenzt ist, wobei sich der Trockenraum an die Nass-Trockenraum-Trennung zu einer Türinnenverkleidung anschließt, wobei die Nass-Trockenraum-Trennung eine Dichtungsanordnung (2) umfasst, die an dem Türmodul (1) angeordnet und mit diesem verbunden ist, wobei die Dichtungsanordnung (2) aus einem sich in eine Längsrichtung (L) erstreckendes Dichtungsmaterial besteht, welches, in einem Schnitt senkrecht zur Längsrichtung (L) betrachtet, einen Basisabschnitt (3) aufweist, von dem aus sich zwei Dichtlippen (4, 5) erstrecken,
**dadurch gekennzeichnet,**
**dass** sich die beiden Dichtlippen (4, 5), in einem Schnitt senkrecht zur Längsrichtung (L) betrachtet, von einem Ansatzpunkt (6, 7) am Basisabschnitt (3) ausgehend zu einem Endpunkt (8, 9) am Ende (10, 11) der Dichtlippe (4, 5) erstrecken und so jeweils eine Dichtlippenrichtung (R1, R2) definieren, wobei der Winkel (a) zwischen den beiden Dichtlippenrichtungen (R1, R2) größer oder gleich Null Grad beträgt, so dass die beiden Dichtlippen (4, 5) voneinander weg gerichtet sind oder sich parallel zueinander erstrecken.

2. Kraftfahrzeug-Fahrzeugtüre nach Anspruch 1, **dadurch gekennzeichnet, dass** der Winkel (a) zwischen den beiden Dichtlippenrichtungen (R1, R2) größer als 10° ist, vorzugsweise größer als 20°, besonders bevorzugt größer als 30°.

3. Kraftfahrzeug-Fahrzeugtüre nach Anspruch 1 oder 2, **dadurch gekennzeichnet, dass** die beiden Dichtlippen (4, 5) eine V-förmige Gestaltung bilden.

4. Kraftfahrzeug-Fahrzeugtüre nach einem der Ansprüche 1 bis 3, **dadurch gekennzeichnet, dass** die Länge (L1, L2) der beiden Dichtlippen (4, 5), ausgehend vom Basisabschnitt (3), unterschiedlich ist.

5. Kraftfahrzeug-Fahrzeugtüre nach Anspruch 4, **dadurch gekennzeichnet, dass** die eine Dichtlippe (5) mindestens 10 % länger ausgebildet ist als die andere Dichtlippe (4).

6. Kraftfahrzeug-Fahrzeugtüre nach einem der Ansprüche 1 bis 5, **dadurch gekennzeichnet, dass** das Dichtungsmaterial aus Thermoplastischen Elastomer (TPE) besteht.

7. Kraftfahrzeug-Fahrzeugtüre nach einem der Ansprüche 1 bis 6, **dadurch gekennzeichnet, dass** das Dichtungsmaterial eine Härte zwischen 30 und 50 Shore A aufweist.

8. Kraftfahrzeug-Fahrzeugtüre nach einem der Ansprüche 1 bis 7, **dadurch gekennzeichnet, dass** der Basisabschnitt (3) zumindest teilweise in einer Nut (12) angeordnet ist, die im Türmodul (1) ausgebildet ist.

9. Kraftfahrzeug-Fahrzeugtüre nach Anspruch 8, **dadurch gekennzeichnet, dass** die Dichtungsanordnung (2) in der Nut (12) des Türmoduls (1) durch Anspritzen angeordnet ist.

10. Kraftfahrzeug-Fahrzeugtüre nach einem der Ansprüche 1 bis 9, **dadurch gekennzeichnet, dass** das Türmodul (1) zumindest teilweise aus Kunststoff besteht, vorzugsweise aus Polypropylen (PP).
